# EUROPÄISCHE PATENTSCHRIFT

(11) **EP 3 274 612 B1**
(45) Veröffentlichungstag und Bekanntmachung des Hinweises auf die Patenterteilung: **17.11.2021**
(21) Anmeldenummer: 16731016.8
(22) Anmeldetag: 22.03.2016
(51) Int. Cl.: F16H 25/20, E05B 81/20, E05B 81/40, E05B 81/24

(54) **STELLEINHEIT FÜR EINEN ZUZIEHANTRIEB FÜR EIN KRAFTFAHRZEUGSCHLOSS**
CONTROL UNIT FOR A CLOSING DRIVE FOR A MOTOR VEHICLE LOCK
UNITÉ D'ACTIONNEMENT POUR UN ENTRAÎNEMENT DE FERMETURE D'UNE SERRURE DE VÉHICULE À MOTEUR

(30) Priorität: 25.03.2015 DE 102015004018
(43) Veröffentlichungstag der Anmeldung: 31.01.2018
(73) Patentinhaber: Kiekert AG, 42579 Heiligenhaus (DE)
(72) Erfinder: TÖPFER, Claus, 71063 Sindelfingen (DE); KIND, Andreas, 99897 Tambach-Dietharz (DE); STÖTZER, Jan, 99897 Tambach-Dietharz (DE)
(86) Internationale Anmeldenummer: PCT/DE2016/100132
(87) Internationale Veröffentlichungsnummer: WO 2016/150433

(56) Entgegenhaltungen:
- DE-A1- 10 011 859
- DE-U1-202012 004 789
- US-A1- 2013 133 448

## Beschreibung

Die Erfindung betrifft eine Stelleinheit eines Zuziehantriebs eines Kraftfahrzeugschlosses, aufweisend ein Stellglied, ein Gehäuse, eine Antriebseinheit, ein Spindelgetriebe mit einer Spindelmutter und einer Spindel, wobei das Spindelgetriebe von der Antriebseinheit antreibbar ist und das Stellglied mittels der Spindel bewegbar ist.

Um die Bedienung eines Kraftfahrzeugs zu erleichtern, werden mehr und mehr technische Funktionen in das Kraftfahrzeug integriert. Die Bedienerfreundlichkeit wird gesteigert und Fehlfunktionen, wie beispielsweise eine unverschlossene Seitentür, können vermieden werden. Eine Komfortfunktion ist es dabei, dass die Seitentüren automatisch zugezogen werden. Ein Zuziehen erfolgt hierbei dann, wenn der Benutzer die Seitentür nur leicht schließt, so dass das Seitentürschloss lediglich in eine Vorrastposition gelangt, von der aus dann die Seitentür automatisch vollständig geschlossen wird. Dies erleichtert dem Benutzer die Bedienung dahingehend, dass nur geringe Kräfte zum vollständigen Schließen einer Kraftfahrzeugtür benötigt werden. Ein selbständiges Zuziehen kann beispielsweise auch dann von Vorteil sein, wenn große Türen und/oder große Dichtungsdrücke an den Türen beim Schließen entgegenstehen.

Auch wenn hier beispielhaft Seitentüren genannt werden, so soll dies nicht beschränkend gelten, sondern bezieht sich die Stelleinheit mit dem Stellglied auch auf andere Funktionen im Kraftfahrzeug, wie beispielsweise ein elektromotorisches Zuziehen einer Frontklappe, einer Heckklappe oder einer Schiebetür. Dies sind aber wiederum auch lediglich Beispiele, die das Einsatzgebiet der Stelleinheit nicht beschränken. Vielmehr kann die Stelleinheit immer dann zum Einsatz kommen, wenn mittels eines Bowdenzugs Kräfte in eine Funktionseinheit eines Kraftfahrzeugs eingeleitet werden. Beispielhaft kann die Stelleinheit ein Teil eines Zuziehantriebs für ein Kraftfahrzeugschloss sein. Mittels des Zuziehantriebs kann eine noch nicht vollständig geschlossene Seitentür, die beispielsweise in einer Vorrast vorliegt, in eine Hauptrast überführt werden.

Vorrast und Hauptrast definieren die beiden sicherheitsrelevanten Schließstellungen einer Kraftfahrzeugseitentür, bei der auch eine nicht vollständig geschlossene Tür, die sich beispielsweise in einer Vorrast befindet, vom Kraftfahrzeugschloss in dieser Offenstellung gehalten werden muss. In der Hauptrast ist die Seitentür dann vollumfänglich geschlossen. Beim elektrischen Schließen muss der Zuziehantrieb die Tür gegen die Kraft der umlaufenden Türdichtung zuziehen, wobei je nach Größe der Tür unterschiedliche Kräfte durch den Zuziehantrieb zur Verfügung zu stellen sind.

Aus der DE 20 2008 007 310 U1 ist ein Kraftfahrzeugtürverschluss mit einem Gesperre und mit einer Zuzieheinrichtung mit einem elektrischen Antrieb bekannt geworden, wobei die Zuzieheinrichtung auf das Gesperre des Kraftfahrzeugtürverschlusses wirkt. Mittels einer Hebemechanik, die über eine Zuziehklinke unmittelbar auf das Gesperre wirkt, kann das Gesperre von einer Vorrast in eine Hauptrast überführt werden. Die hierzu eingesetzte Hebelmechanik, einschließlich der Zuziehklinke, wird über einen Spindelantrieb betätigt. Die Spindelmutter wiederum wird über einen Motor mit einem nachgeschalteten Getriebe über die Spindel bewegt. Beim Zuziehen führt die Spindelmutter eine Vorwärtsbewegung aus, wodurch das Gesperre bestehend aus Drehfalle und Sperrklinke von einer Vorrastposition in eine Hauptrastposition überführt wird.

Aus der DE 10 2012 218 650 A1 ist eine Stelleinheit mit einem Stellglied und einer Antriebseinheit für ein Bewegen des Stellglieds und einem an dem Stellglied angeschlossenen Bowdenzug bekannt. Offenbart ist eine Stelleinheit und insbesondere ein Zuziehantrieb für ein Kraftfahrzeugschloss, der wiederum mit einem elektrischen Antrieb und einem Spindelgetriebe versehen ist. Das Stellglied ist mit der Spindel verbindbar und wird linear im Gehäuse geführt. An das Stellglied ist ein Bowdenzug angeschlossen, so dass mittels der Spindel und dem Stellglied die Bowdenzugseele betätigbar ist. Mittels des Bowdenzugs kann dann beispielsweise ein Gesperre von einer Vorrast in eine Hauptrast überführt werden, wobei vorzugsweise eine Zugkraft durch das Stellglied bzw. den Zuziehantrieb auf ein Kraftfahrzeugschloss übertragbar ist. Auch aus der DE 20 2012 004 789 U1 ist eine gattungsgemäße Stelleinheit eines Zuziehantriebs eines Kraftfahrzeugschlosses bekannt.

Ein Problem, das sich bei der Weiterentwicklung von Kraftfahrzeugschlössern bzw. Stelleinheiten oder Zuziehantrieben, stellt, ist das, dass einerseits große Kräfte übertragen werden müssen und andererseits ein Verdrehen des Stellglieds verhindern werden soll. Ein Verdrehen des Stellglieds soll dabei möglichst derart ausgeführt sein, dass einerseits ein sicheres Führen des Stellglieds gewährleistet wird und darüber hinaus eine möglichst optimale Übertragung der Kräfte durch das Stellglied gewährleistet werden muss. Dieses Problem wird dadurch erschwert, dass ein Bestreben der Kraftfahrzeugindustrie darin liegt, die Kraftfahrzeuge insgesamt leichter auszuführen.

Aufgabe der Erfindung ist es, eine verbesserte Stelleinheit mit einem Stellglied bereitzustellen. Darüber hinaus ist es Aufgabe der Erfindung, eine Stelleinheit mit einem Stellglied bereitzustellen, die eine Verdrehsicherung für das Stellglied aufweist, und gleichzeitig in der Lage ist, eine optimale Kraftübertragung vom Stellglied auf das am Stellglied angeschlossene Mittel zur Kraftübertragung zu gewährleisten.

Die Lösung der Aufgabe erfolgt erfindungsgemäß durch die Merkmale des unabhängigen Patentanspruchs 1. Vorteilhafte Ausgestaltungen der Erfindung sind in den Unteransprüchen angegeben.

Gemäß dem Patentanspruch 1 wird die Aufgabe der Erfindung dadurch gelöst, dass eine Stelleinheit eines Zuziehantriebs eines Kraftfahrzeugschlosses, bereitgestellt wird, aufweisend ein Stellglied, ein Gehäuse, eine Antriebseinheit, ein Spindelgetriebe mit einer Spindelmutter und einer Spindel, wobei das Spindelgetriebe von der Antriebseinheit antreibbar ist und das Stellglied mittels der Spindel bewegbar ist, und wobei das Stellglied Mittel zum Führen des Stellglieds im Gehäuse aufweist, so dass ein Verdrehen des Stellglieds um eine Bewegungsachse verhinderbar ist. Durch die erfindungsgemäße Ausgestaltung der Stelleinheit ist nun die Möglichkeit geschaffen, eine verbesserte Stelleinheit bereitzustellen, die ein Verdrehen des Stellglieds unmittelbar verhindert. Das Führen des Stellglieds im Gehäuse der Stelleinheit bietet dabei die Möglichkeit, das Stellglied linear über die gesamte Bewegungsstrecke sicher zu positionieren und im Gehäuse zu führen. Darüber hinaus kann mittels einer linearen Führung über den Bewegungsweg im Gehäuse einerseits eine gleichmäßige Kraftübertragung während der Bewegung des Stellglieds ermöglicht werden und gleichzeitig kann das Stellglied als Verdrehsicherung für zum Beispiel einen am Stellglied angebundenen Bowdenzug dienen. Darüber hinaus kann das Stellglied als Lagerpunkt für die Spindel dienen.

Die Stelleinheit umfasst ein Gehäuse, in der zumindest das Stellglied, die Spindel, das Spindelgetriebe und die Antriebseinheit aufgenommen sind. Die Antriebseinheit ist bevorzugt ein Elektromotor, der beispielsweise mit einer Schnecke in die Spindelmutter eingreift, so dass eine Drehbewegung der Spindelmutter erzielbar ist. Wird der Elektromotor der Antriebseinheit angetrieben, so bewegt sich die Spindelmutter, was wiederum in einer Linearbewegung der Spindel resultiert. Die Spindel wird in der Spindelmutter hin und her bewegt, so dass gleichzeitig das an der Spindel angebrachte Stellglied eine Bewegung im Gehäuse der Stelleinheit vollführt. Dabei dient die Stelleinheit als Zuziehantrieb für ein Kraftfahrzeugschloss, wobei zum Beispiel ein Heckklappenschloss automatisch zugezogen werden kann. Dazu kann das Stellglied mittelbar oder unmittelbar mit einem Zuziehmittel am Schloss verbunden sein. Das Stellglied ist mit einem Bowdenzug verbunden, der wiederum mit einem Kraftfahrzeugschloss zusammenwirkt.

In einer Ausführungsform der Erfindung ist das Stellglied formschlüssig im Gehäuse geführt. Ein Formschluss kann kostengünstig hergestellt werden und bietet darüber hinaus die Möglichkeit einer gleichbleibenden Anlagefläche über den linearen Verschiebeweg des Stellglieds. Vorzugsweise ändert sich der Formschluss über den Verfahrweg des Stellglieds nicht. Somit können zu jedem Zeitpunkt gleichgroße Kräfte zur Bewegung des Stellglieds durch das Gehäuse realisiert werden. Ein Formschluss bietet darüber hinaus die Möglichkeit, möglichst große Anlageflächen für das Stellglied am Gehäuse zu realisieren. Vorstellbar ist es dabei, dass das Stellglied mit zwei planparallelen sich gegenüberliegenden Flächen ausgebildet wird, die wiederum in planparallelen Flächen des Gehäuses geführt sind. Neben den zwei planparallelen sich gegenüberliegenden Flächen können zwei weitere Oberflächen am Stellglied ausgebildet sein, die in Form eines Kreisabschnittes sich ebenfalls gegenüberliegend ausgebildet sind. Das Stellglied würde in diesem Fall zwei kreisabschnittsförmige Flächen sowie zwei planparallele Flächen aufweisen, so dass eine Querschnittsfläche vorliegen würde, die als im weitesten Sinne rechteckförmig beschreibbar ist. Diese rechteckförmige Querschnittsfläche würde dann als Anlagefläche im Gehäuse der Stelleinheit als Anlagefläche zur linearen Verschiebung des Stellglieds im Gehäuse zur Verfügung stehen.

In einer weiteren Ausführungsform weist das Gehäuse zumindest eine Ausnehmung, insbesondere eine Nut, auf, wobei das Stellglied eine mit der Ausnehmung korrespondierende Erhebung aufweist, so dass das Stellglied in der Nut führbar ist. Die Ausbildung einer Ausnehmung im Gehäuse ist konstruktiv leicht herzustellen und bietet somit einen Kostenvorteil. Die Ausnehmung kann dabei aber auch derart ausgebildet sein, dass eine zusätzliche Verdrehsicherung in die Ausnehmung eingeformt wird. Dabei kann insbesondere an eine Hinterschneidung gedacht sein, so dass das Stellglied mittels einer Ausnehmung in Form einer Nut mit einer Hinterschneidung geführt ist, wodurch eine zuverlässige Verdrehsicherung realisierbar ist. Darüber hinaus bietet die Ausbildung zumindest einer Nut den Vorteil, dass das Stellglied nicht fehlerhaft montierbar ist. auch bei einer Ausgestaltung in Form von zwei versetzt zueinander angeordneten Nuten kann ein fehlerhaftes Montieren des Stellglieds zumindest bei einem unsymmetrischen Aufbau ausgeschlossen werden. Alternativ ist es natürlich ebenso vorstellbar, dass das Stellglied eine Ausnehmung aufweist und das Gehäuse eine Erhebung enthält, in der das Stellglied linear über den gesamten Verfahrweg des Stellglieds hinweg führbar ist.

Weist das Gehäuse zumindest zwei unterschiedliche Ausnehmungen auf, so ergibt sich eine weitere Ausführungsform der Erfindung, wobei das Stellglied mit den Ausnehmungen korrespondierende Erhebungen aufweist, so dass das Stellglied in den Ausnehmungen führbar ist. Zwei unterschiedliche Ausnehmungen bieten den Vorteil einer Verteilung der Lastangriffspunkte und insbesondere die Möglichkeit, Momente, die auf das Stellglied wirken auf die unterschiedlichen Ausnehmungen zu verteilen. Darüber hinaus sind unterschiedliche Ausnehmungen ein Vorteil in Bezug auf eine Montagesicherheit. Ausnehmungen und korrespondierende Erhebungen bieten darüber hinaus den Vorteil, dass je nach Belastung und aufzunehmendem Drehmoment Spieltoleranzen am Stellglied bzw. zwischen Gehäuse und Stellglied einstellbar sind. Geringe Toleranzen erhöhen das Reibmoment, bieten aber den Vorteil einer hohen Lagesicherung.

Erfindungsgemäß weist das Stellglied zumindest eine evolventenförmige Verzahnung auf, die in einer korrespondierenden Ausnehmung des Gehäuses geführt ist. Evolventenförmig ausgebildete Verzahnungen am Stellglied bieten die Möglichkeit, eine Last möglichst optimal auf das Gehäuse zu übertragen. Bilden sich beispielsweise bei einem als rechteckförmig beschreibbaren Stellglied linienförmige Berührungspunkte zwischen Stellglied und Gehäuse aus, so ist es bei einer Ausbildung des Stellglieds in Form einer Evolventenverzahnung möglich, eine flächige Anlage zwischen dem Stellglied und dem Gehäuse herzustellen. Eine flächige Anlage des Stellglieds bietet den Vorteil einer maximalen Kraftverteilung eines auf das Stellglied wirkenden Drehmoments, so dass die Reibwerte zwischen Stellglied und Gehäuse minimiert werden.

Erfindungsgemäß ist an das Stellglied ein Bowdenzug fest angebunden, und wird der Bowdenzug im Rahmen seiner Betätigung, zum Beispiel an seinem äußersten Angriffspunkt, beim Zuziehen oder Verstellen verdreht, und soll der Bowdenzug zur Minimierung der Belastung des Bowdenzugs ebenfalls während des Verstellens verdreht werden, so bieten Nuten und/oder Verzahnungen die Möglichkeit, das Stellglied über den Verfahrweg hinweg gezielt einer Winkelbewegung zuzuführen. Eine Winkelbewegung des Stellglieds über den Verfahrweg unterscheidet sich dabei von einem Verdrehen in Form eines ungewollten Verdrehens des Stellglieds durch zum Beispiel äußere Kräfte, die auf das Stellglied wirken, die unterbunden bzw. unerwünscht wären. Es ist aber auch vorstellbar, dass an das Stellglied unmittelbar eine Hebelmechanik angebunden ist, die ebenfalls eine Winkeldrehbewegung während der Betätigung ausführen soll. In diesem Fall dienen die Nuten oder Ausnehmungen einerseits als Verdrehsicherung, um unerwünschte Drehbewegungen de Stellglieds zu vermeiden; es besteht aber andererseits die Möglichkeit, das Stellglied gezielt um einen Winkelbetrag über den Verstellweg hinweg zu bewegen.

Sind die Mittel zur Führung regelmäßig am Umfang des Stellglieds verteilt angeordnet, so ergibt sich eine weitere Ausführungsform der Erfindung. Eine regelmäßige Anordnung der Mittel zur Führung bietet den Vorteil, dass eine gleichmäßige Verteilung der in das Stellglied eingeleiteten Drehmomente ermöglicht wird. An jeder Stelle des Stellglieds wirken dann die gleichen Kräfte zwischen Stellglied und Gehäuse. Darüber hinaus sind regelmäßige am Umfang verteilte Führungen leicht herstellbar und somit kostengünstig. Eine regelmäßige Ausbildung von Führungen ermöglicht es hierbei ebenfalls, dass das Stellglied schnell montierbar ist, da auf Fügehilfen oder ein genaues Ausrichten des Stellglieds verzichtet werden kann. Durch eine gleichmäßige Anlage der regelmäßig am Umfang ausgebildeten Mittel zur Führung kann die Belastung gleichmäßig verteilt werden und somit eine Abnutzung minimiert werden.

Erfindungsgemäß sind fünf evolventenförmige Verzahnungen und eine rechteckförmige Verzahnung am Umfang des Stellglieds angeordnet, die in korrespondierenden Ausnehmungen des Gehäuses geführt sind. Die Erfindung kombiniert die Vorteile einer Evolventenverzahnung mit dem Vorteil der eindeutigen Positionierung des Stellglieds im Gehäuse. Die Toleranzen sind einstellbar, ein fehlerhaftes Montieren kann verhindert werden und es können maximale Anlageflächen für zwischen dem Stellglied und dem Gehäuse realisiert werden, so dass ein möglichst optimales Einleiten eines Moments zwischen Gehäuse und Stellglied ermöglicht wird.

Erfindungsgemäß sind das Stellglied und die Spindel einstückig ausgebildet. Die einstückige Ausbildung von Stellglied und Spindel ermöglicht eine leichte Herstellbarkeit und bietet gleichzeitig den Vorteil, einer maximalen Kraftübertragung zwischen Spindel und Stellglied. Insbesondere, in dem Fall, in dem die Stelleinheit hohe Zugkräfte erzeugen muss, ist ein optimaler Kraftfluss von Spindel in Richtung des Stellglieds vorteilhaft. Durch eine geeignete Ausbildung im Übergangsbereich zwischen Spindel und Stellglied, kann ein optimaler Kraftlinienverlauf zum Einleiten einer Kraft der Stelleinheit auf einen zum Beispiel Bowdenzug am Stellglied gewährleistet werden.

Vorteilhafter in einer bevorzugten Ausführungsform sind zumindest das Stellglied und die Spindel aus Kunststoff gebildet. Kunststoff bietet den Vorteil einer guten Formbarkeit und kombiniert diesen Vorteil mit dem Vorteil eines geringen Gewichts. Darüber hinaus sind Kunststoffe gut weiterverarbeitbar und kostengünstig herstellbar. Ein bevorzugter Werkstoff ist Polyoxymethylen (POM).

Erfindungsgemäß ist das Stellglied mit einem Bowdenzug verbunden. Die Verbindung zwischen dem Stellglied und einem Bowdenzug ermöglicht es hierbei, auch weit entfernte Betätigungen mittels der Stelleinheit zu realisieren und gleichzeitig den Vorteil, dass Kräfte umgelenkt werden können. Die Stelleinheit kann hohe Kräfte und insbesondere Zugkräfte in einem Bowdenzug einleiten, die dann bei geeigneter Führung des Bowdenzugs zum Beispiel in einem Seitentürschloss eines Kraftfahrzeugs zum Zuziehen des Schlosses bzw. der Seitentür zur Verfügung stehen.

Erstrecken sich die Mittel zur Führung des Stellglieds entlang des Gehäuses, so dass eine Linearbewegung des Stellglieds ermöglichbar ist, so ergibt sich eine weitere Ausführungsform der Erfindung. Der Spindelantrieb erzeugt eine lineare Bewegung, so dass ein lineares Bewegen des Stellglieds ermöglicht wird. Sind die Mittel zur Führung entlang des Gehäuses und insbesondere identisch bzw. gleichförmig entlang des Gehäuses ausgebildet, so kann über den gesamten Verstellweg des Stellglieds eine gleich bleibende Verdrehsicherung für das Stellglied zur Verfügung gestellt werden. Insbesondere sind die Reibungskräfte zwischen Stellglied und Gehäuse vorherbestimmbar und über den gesamten Verstellweg gleichförmig.

Nachfolgend wird die Erfindung unter Bezugnahme auf die anliegenden Zeichnungen anhand bevorzugter Ausführungsbeispiele näher erläutert. Es gilt jedoch der Grundsatz, dass das Ausführungsbeispiel die Erfindung nicht beschränkt, sondern lediglich eine vorteilhafte Ausführungsform darstellt.

Es zeigen:
- Fig. 1: einen Querschnitt durch eine Stelleinheit gemäß dem Stand der Technik im Bereich der Spindelmutter, wobei der Schnitt durch die Spindelmutter, das Gehäuse, den Bowdenzug und das Stellglied gelegt ist,
- Fig. 2: einen Schnitt durch ein Gehäuse einer erfindungsgemäßen Stelleinheit mit einem Stellglied und einem Teil einer Spindel,
- Fig. 3: einen Schnitt durch das Gehäuse gemäß der Fig. 2 entlang der Linie III-III als Draufsicht auf das Stellglied,
- Fig. 4: eine weitere Ausführungsform aus dem Stand der Technik in einer dreidimensionalen Ansicht als Schnitt durch das Gehäuse mit einer Spindel und einem Stellglied, und
- Fig. 5: einen Schnitt entlang der Linie V-V aus der Fig. 4 als Draufsicht auf ein rechteckförmiges Stellglied.

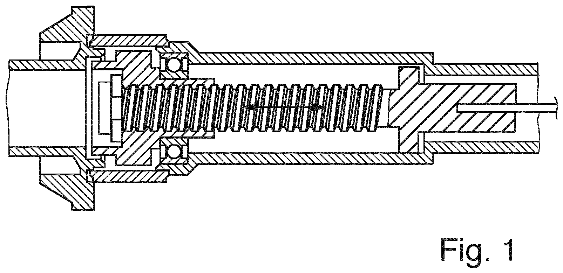

Fig. 1 zeigt einen Schnitt durch eine Stelleinheit gemäß dem Stand der Technik, wie sie beispielsweise aus der DE 10 2015 100 750.9 bekannt ist. Das Stellglied ist mit einem Bowdenzug verbunden und wird an die Spindel angeformt. Zur linearen Führung des Stellglieds ist das Stellglied im Gehäuse der Stelleinheit geführt. Spindel, Spindelmutter und Gehäuse entsprechen einem gattungsgemäßen Stand der Technik.

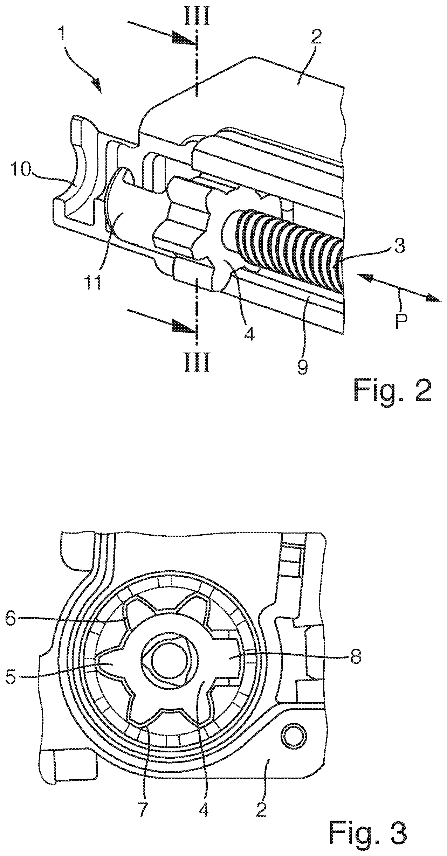

Die Fig. 2 zeigt lediglich einen Teilbereich einer erfindungsgemäßen Stelleinheit 1 mit einem Gehäuse 2, einer Spindel 3 und einem Stellglied 4. Das Stellglied 4 ist linear verschieblich in Richtung des Pfeils P hin und her beweglich im Gehäuse 2 aufgenommen. Stellglied 4 und Spindel 3 sind in diesem Ausführungsbeispiel einstückig ausgebildet.

In der Fig. 3 ist die Ansicht auf das Stellglied 4 aus Richtung der Pfeile III in einem Schnitt durch das Gehäuse 2 wiedergegeben. Das Stellglied 4 weist fünf evolventenförmige Zähne 5 auf, die in regelmäßigen Abständen am Umfang des Stellglieds angeordnet sind. Die Evolventenverzahnung 5 bildet große Anlageflächen 6 in Bezug auf die Ausnehmungen 7 im Gehäuse. Durch die Ausbildung der evolventenförmigen Verzahnung 5 werden große Anlagenflächen 6 gebildet, die aufgrund der in der Fig. 2 zu erkennenden Längserstreckung der Verzahnung 5 flächenförmige Anlageflächen zwischen Gehäuse 2 und Stellglied 4 ausbilden.

Zusätzlich zu der Verzahnung 5 ist ein als rechteckförmig beschreibbarer Zahn 8 am Stellglied ausgebildet. Es liegen somit unterschiedliche Erhebungen 5, 8 bzw. Verzahnungen 5, 8 am Stellglied vor. Die unterschiedliche Ausbildung der Verzahnung 5, 8 bietet dabei den Vorteil einer hohen Anlagefläche 6 sowie gleichzeitig den Vorteil einer Montagesicherung. Erhebungen 9 und Ausnehmungen 7 im Gehäuse 2 bilden eine sich über den Verfahrweg des Stellglieds 4 längserstreckende Führung für das Stellglied 4.

Wie weiterhin aus der Fig. 2 zu erkennen, bildet das Gehäuse 2 zusätzlich eine Aufnahme 10 für einen Bowdenzug sowie eine Befestigung 11 zur Aufnahme eines Endes der nicht dargestellten Bowdenzugseele. Durch eine Verschiebung des Stellglieds 4 in Richtung des Pfeils P mittels einer Spindelmutter und der Spindel 3 kann das Stellglied 4 linear bewegt werden. Die Mittel zum Führen 5, 7, 8, 9 dienen dabei als Verdrehsicherung für das Stellglied 4.

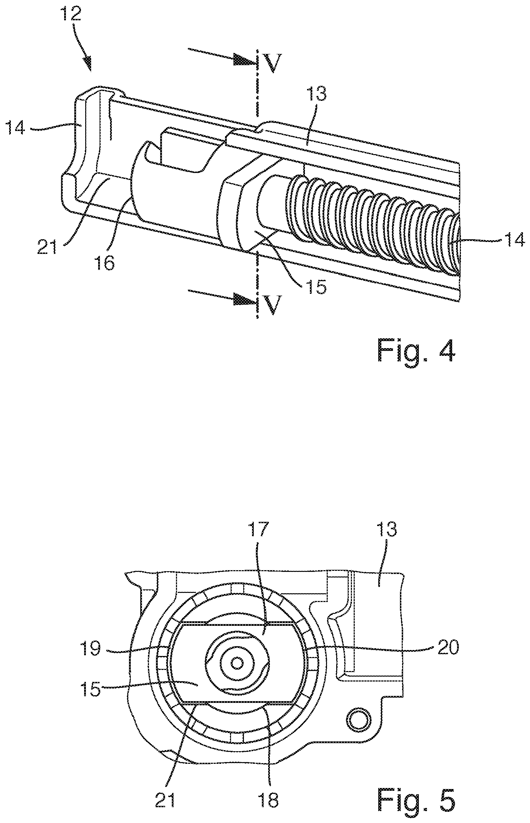

In der Fig. 4 ist ein weiteres Ausführungsbeispiel einer Stelleinheit 12 wiedergegeben, das aus dem Stand der Technik bekannt ist. Die Stelleinheit 12 weist ein Gehäuse 13, eine Spindel 14 sowie ein Stellglied 15 auf. Das Gehäuse 13 umfasst ferner eine Aufnahme 14 für einen Bowdenzug sowie ebenfalls eine Befestigung 16 für eine Bowdenzugseele. Befestigung 16, Stellglied 15 und Spindel 14 sind in diesem Ausführungsbeispiel einstückig ausgebildet.

Die Fig. 5 zeigt einen Schnitt durch das Gehäuse 13 entlang der Linie V-V aus Fig. 4. Das Stellglied 15 weist zwei parallele Oberflächen 17, 18 und zwei kreisabschnittsförmige Oberflächen 19, 20 auf. Die Querschnittsfläche des Stellglieds 15 kann somit als grob-rechteckförmig beschrieben werden. Die planparallelen Oberflächen 17, 18 der sich gegenüberliegenden Seiten des Stellglieds 15 liegen auf Führungsflächen 21 des Gehäuses 13 auf. Zur besseren Übersichtlichkeit der Figuren ist lediglich eine Führungsfläche 21 mit einem Bezugszeichen versehen. Die kreisabschnittsförmigen Oberflächen 19, 20 sowie die planparallelen Oberflächen 17, 18 liegen vollumfänglich bzw. bereichsweise am Gehäuse an. Die Führungsflächen 21 dienen dabei als Verdrehsicherung.

Insbesondere, dann, wenn die Stelleinheiten 1, 12 aus Kunststoff gefertigt sind, wobei bevorzugt POM als Werkstoff eingesetzt wird, kann eine kostengünstige Herstellung sowie ein geringes Gewicht für die Stelleinheiten 1, 12 gewährleisten werden. Bevorzugt sind die Spindeln 3, 14, die Stellglieder 4, 15 und die Befestigungen 11, als einstückiges Kunststoffspritzgussbauteil ausgebildet.

### Bezugszeichenliste

- 1: Stelleinheit
- 2: Gehäuse
- 3: Spindel
- 4: Stellglied
- 5: evolventenförmige Verzahnung
- 6: Anlagefläche
- 7: Ausnehmungen
- 8: rechteckförmiger Zahn
- 9: Erhebungen
- 10: Aufnahme
- 11: Befestigung
- 12: Stelleinheit
- 13: Gehäuse
- 14: Aufnahme
- 15: Stellglied
- 16: Befestigung
- 17, 18: parallele Oberfläche
- 19, 20: kreisabschnittsförmige Oberfläche
- 21: Führungsflächen

- P: Pfeil

## Patentansprüche

1. Stelleinheit (1) eines Zuziehantriebs eines Kraftfahrzeugschlosses, aufweisend ein Stellglied (4), ein Gehäuse (2), eine Antriebseinheit, ein Spindelgetriebe mit einer Spindelmutter und einer Spindel (3), wobei das Spindelgetriebe von der Antriebseinheit antreibbar ist und das Stellglied (4) mittels der Spindel (3) bewegbar ist, wobei das Stellglied (4) Mittel zum Führen des Stellglieds (4) im Gehäuse (2) aufweist, so dass ein Verdrehen des Stellglieds (4) um eine Bewegungsachse verhinderbar ist, wobei das Stellglied (4) und die Spindel (3) einstückig ausgebildet sind, wobei das Stellglied (4) mit einem Bowdenzug verbunden ist, **dadurch gekennzeichnet, dass** fünf evolventenförmige Verzahnungen (5) und eine rechteckförmige Verzahnung (8) am Umfang des Stellglieds (4) angeordnet sind, die in korrespondierenden Ausnehmungen (7) des Gehäuses (2) geführt sind.

2. Stelleinheit (1) nach Anspruch 1, **dadurch gekennzeichnet, dass** das Stellglied (4) formschlüssig im Gehäuse (2) geführt ist.

3. Stelleinheit (1) nach einem der Ansprüche 1 oder 2, **dadurch gekennzeichnet, dass** das Gehäuse (2) zumindest eine Ausnehmung (7), insbesondere eine Nut, aufweist, wobei das Stellglied (4) eine mit der Ausnehmung (7) korrespondierende Erhebung (5) aufweist, so dass das Stellglied (4) in der Ausnehmung (7) führbar ist.

4. Stelleinheit (1) nach einem der Ansprüche 1 bis 3, **dadurch gekennzeichnet, dass** das Gehäuse (2) zumindest zwei unterschiedliche Ausnehmungen (7) aufweist, wobei das Stellglied (4) mit den Ausnehmungen (7) korrespondierende Erhebungen (5) aufweist, so dass das Stellglied (4) in den Ausnehmungen (7) führbar ist.

5. Stelleinheit (1) nach einem der Ansprüche 1 bis 4, **dadurch gekennzeichnet, dass** die Mittel zur Führung regelmäßig am Umfang des Stellglieds (4) verteilt angeordnet sind.

6. Stelleinheit (1) nach einem der Ansprüche 1 bis 5, **dadurch gekennzeichnet, dass** zumindest das Stellglied (4) und die Spindel (3) aus Kunststoff gebildet sind.

7. Stelleinheit (1) nach einem der Ansprüche 1 bis 6, **dadurch gekennzeichnet, dass** die Mittel zur Führung des Stellglieds (4) sich entlang des Gehäuses (2) erstrecken, so dass eine Linearbewegung des Stellglieds (4) ermöglichbar ist.

## Claims

1. Actuating unit (1) of a closing drive of a motor vehicle lock, comprising an actuator (4), a housing (2), a drive unit, a spindle gear having a spindle nut and a spindle (3), the spindle gear being drivable by the drive unit and the actuator (4) being movable by means of the spindle (3), the actuator (4) having means for guiding the actuator (4) in the housing (2), so that the actuator (4) can be prevented from rotating about an axis of movement, the actuator (4) and the spindle (3) being formed in one piece, the actuator (4) being connected to a Bowden cable, **characterized in that** five involute toothings (5) and one rectangular toothing (8) are arranged on the periphery of the actuator (4), which toothings are guided in corresponding recesses (7) of the housing (2).

2. Actuating unit (1) according to claim 1, **characterized in that** the actuator (4) is guided in the housing (2) in a form-fitting manner.

3. Actuating unit (1) according to either claim 1 or claim 2, **characterized in that** the housing (2) has at least one recess (7), in particular a groove, the actuator (4) having an elevation (5) that corresponds to the recess (7), so that the actuator (4) can be guided in the recess (7).

4. Actuating unit (1) according to any of claims 1 to 3, **characterized in that** the housing (2) has at least two different recesses (7), the actuator (4) having elevations (5) that correspond to the recesses (7), so that the actuator (4) can be guided in the recesses (7).

5. Actuating unit (1) according to any of claims 1 to 4, **characterized in that** the means for guiding are uniformly distributed over the periphery of the actuator (4).

6. Actuating unit (1) according to any of claims 1 to 5, **characterized in that** at least the actuator (4) and the spindle (3) are made of plastics material.

7. Actuating unit (1) according to any of claims 1 to 6, **characterized in that** the means for guiding the actuator (4) extend along the housing (2), so that a linear movement of the actuator (4) is possible.

## Revendications

1. Unité d'actionnement (1) d'un entraînement de fermeture d'une serrure de véhicule automobile, comprenant un organe d'actionnement (4), un boîtier (2), une unité d'entraînement, une transmission à broche comportant un écrou de broche et une broche (3), la transmission à broche pouvant être entraînée par l'unité d'entraînement et l'organe d'actionnement (4) pouvant être déplacé au moyen de la broche (3), l'organe d'actionnement (4) comprenant des moyens permettant de guider l'organe d'actionnement (4) dans le boîtier (2) de manière à pouvoir empêcher une rotation de l'organe d'actionnement (4) autour d'un axe de déplacement, l'organe d'actionnement (4) et la broche (3) étant réalisés d'un seul tenant, l'organe d'actionnement (4) étant relié à un câble Bowden, **caractérisée en ce que** cinq dentures (5) en forme de développante et une denture rectangulaire (8) sont disposées au niveau de la circonférence de l'organe d'actionnement (4), et guidées dans des évidements (7) correspondants du boîtier (2).

2. Unité d'actionnement (1) selon la revendication 1, **caractérisée en ce que** l'organe d'actionnement (4) est guidé dans le boîtier (2) par complémentarité de forme.

3. Unité d'actionnement (1) selon l'une des revendications 1 ou 2, **caractérisée en ce que** le boîtier (2) comprend au moins un évidement (7), en particulier une rainure, l'organe d'actionnement (4) comprenant une surélévation (5) correspondant à l'évidement (7), de sorte que l'organe d'actionnement (4) peut être guidé dans l'évidement (7).

4. Unité d'actionnement (1) selon l'une des revendications 1 à 3, **caractérisée en ce que** le boîtier (2) comprend au moins deux évidements (7) différents, l'organe d'actionnement (4) comprenant des surélévations (5) correspondant aux évidements (7), de sorte que l'organe d'actionnement (4) peut être guidé dans les évidements (7).

5. Unité d'actionnement (1) selon l'une des revendications 1 à 4, **caractérisée en ce que** les moyens de guidage sont régulièrement répartis au niveau de la circonférence de l'organe d'actionnement (4).

6. Unité d'actionnement (1) selon l'une des revendications 1 à 5, **caractérisée en ce qu'**au moins l'organe d'actionnement (4) et la broche (3) sont en matière plastique.

7. Unité d'actionnement (1) selon l'une des revendications 1 à 6, **caractérisée en ce que** les moyens de guidage de l'organe d'actionnement (4) s'étendent le long du boîtier (2) de sorte qu'un déplacement linéaire de l'organe d'actionnement (4) est possible.
